# EUROPÄISCHE PATENTANMELDUNG

(11) **EP 0 626 603 A1**
(43) Veröffentlichungstag der Anmeldung: **30.11.1994**
(21) Anmeldenummer: 94107425.4
(22) Anmeldetag: 13.05.1994
(51) Int. Cl.: G02B 6/44

(54) **Endverschlussanordnung für Lichtwellenleiter zum Anschluss von Einrichtungen der Tele- und Datenkommunikation**

(30) Priorität: 25.05.1993 CH 1567/93
(71) Anmelder: Reichle + De-Massari AG Elektro-Ingenieure, 8620 Wetzikon (CH)
(72) Erfinder: Reichle, Hans, CH-8620 Wetzikon (CH)
(74) Vertreter: Petschner, Goetz

(57) **Zusammenfassung**

Die Endverschlussanordnung für Lichtwellenleiter zum Anschluss von Einrichtungen der Tele- und Datenkommunikation umfasst zwei, vorzugsweise lösbar miteinander verbundene, je eine Ebene bildende Kassetten (1 und 2), wobei der Innenraum der einen Kassette (1) der Aufnahme einer Arbeits- und Spleissreserve einer Bündelader und der Innenraum der anderen Kassette (2) der Aufnahme von Arbeits- und Spleissreserven von Pigtails dient, welche Kassetten (1 und 2) von einem Gehäuse (5) umgeben sind, das obenseitig von einer Deckplatte (6) wenigstens teilweise verschlossen ist, die einen, mit Steckern bestückten, von einer Haube (8) abgedeckten Adapter (9) trägt.

Dies ergibt eine Endverschlussanordnung für Lichtwellenleiter, welche einen einfachen Anschluss von Einrichtungen der Tele- und Datenkommunikation im Büro- oder Hausbereich ohne Erhöhung des Uebergangswiderstandes am Glasfaserkabel gestattet.

## Beschreibung

Die vorliegende Erfindung betrifft eine Endverschlussanordnung für Lichtwellenleiter zum Anschluss von Einrichtungen der Tele- und Datenkommunikation.

In den Signal-Uebertragungsbereichen der Technik, wie Telefonie, On-Line-Systeme und dgl. haben sich Lichtwellenleiter längst durchgesetzt.

Problematisch hierbei ist der Anschluss von Einrichtungen der Tele- und Datenkommunikation im Büro- oder Hausbereich bezüglich einfacher Handhabung und unter Vermeidung mechanischer und optischer Störfaktoren am Glasfaserkabel.

Es ist somit Aufgabe der vorliegenden Erfindung, eine Endverschlussanordnung für Lichtwellenleiter zu schaffen, welche einen einfachen Anschluss von Einrichtungen der Tele- und Datenkommunikation im Büro- oder Hausbereich ohne Erhöhung des Uebergangswiderstandes am Glasfaserkabel gestattet.

Dies wird erfindungsgemäss erreicht durch vorzugsweise zwei, vorzugsweise lösbar miteinander verbundene, je eine Ebene bildende Kassetten, wobei der Innenraum der einen Kassette der Aufnahme einer Arbeits- und Spleissreserve einer Bündelader und der Innenraum der anderen Kassette der Aufnahme von Arbeits- und Spleissreserven von Stecker-Anschlussadern (Pigtails) dient, welche Kassetten von einem Gehäuse umgeben sind, das obenseitig von einer Deckplatte wenigstens teilweise verschlossen ist, die einen, mit Steckern bestückten, von einer Haube abgedeckten Adapter trägt.

Eine solche Endverschlussanordnung erfüllt bereits alle wesentlichen Anforderungen für einen schnellen und sicheren Steckeranschluss von Einrichtungen der Tele- und Datenkommunikation, wobei u.a. diese Enddose im Aufputz oder Unterputz sowie in beliebigen Gestellen fest montiert werden kann.

Für eine Spleissung evtl. Nachspleissung ausserhalb des Gehäuses ist es von Vorteil, wenn die eine oder andere Kassette einen Aufnahmebereich für die Adern-Spleissung aufweist und ferner, wenn die Innenräume der Kassetten radiusbegrenzende Führungen sowie eine Längenausgleichzone für die Bündeladern resp. Pigtails aufweisen.

Universalität wird ferner dann erreicht, wenn das Gehäuse eine genormte und/oder module Rechteckdose mit stirn- und bodenseitiger Kabeleinführung ist, wobei dann die Kassetten innerhalb des Gehäuses von einem Schutzmantel umgeben sind.

Weiter vergrössert sich das Einsatzgebiet, wenn der Adapter mit seinen Steckern und seiner Haube beidseitig um 90° umsetzbar ist.

Optimiert wird die Sicherheit noch dadurch, dass ausgangsseitig des Adapters zwischen diesem und der Haube ein schachtelförmig ausgebildeter Radiusbegrenzer für die aufzusteckenden Adern angeordnet ist.

Ferner ist es vorteilhaft, wenn Teile der Endverschlussanordnung mittels Schnapp- oder Steckverschluss oder durch Schraubenmittel lösbar miteinander verbunden sind.

Eine beispielsweise Ausführungsform des Erfindungsgegenstandes ist nachfolgend anhand der Zeichnung näher erläutert.

Es zeigen:
- Fig. 1: in schematischer Explosiv-Darstellung die erfindungsgemässe Endverschlussanordnung und
- Fig. 2 und 3: Abschnitte der Anordnung gemäss Fig. 1 in schaubildartiger Darstellung zur Veranschaulichung der Führung der Arbeits- und Spleissreserven von Bündelader und Pigtail.

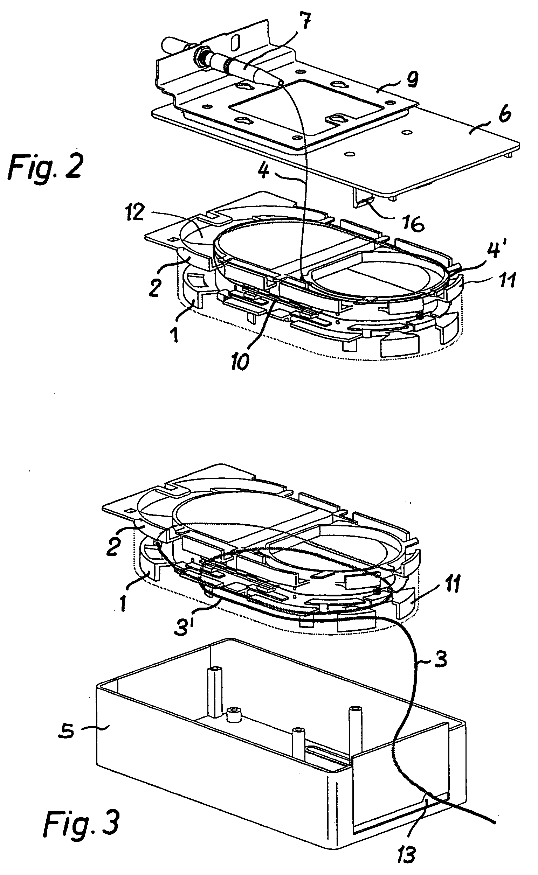

Die Endverschlussanordnung für Lichtwellenleiter zum Anschluss von Einrichtungen der Tele- und Datenkommunikation umfasst zunächst hier zwei, vorzugsweise lösbar miteinander verbundene, je eine Ebene bildende Kassetten 1 und 2, wobei der Innenraum der einen Kassette 1 der Aufnahme einer Arbeits- und Spleissreserve 3' einer Bündelader 3 (Fig. 3) und der Innenraum der anderen Kassette 2 der Aufnahme von Arbeits- und Spleissreserven 4' von Stecker-Anschlussadern (Pigtails) 4 (Fig. 2) dient, welche Kassetten 1 und 2 von einem Gehäuse 5 umgeben sind, das obenseitig von einer Deckplatte 6 wenigstens teilweise verschlossen ist, die einen, mit Steckern 7 (Fig. 2) bestückten, von einer Haube 8 abgedeckten Adapter 9 trägt.

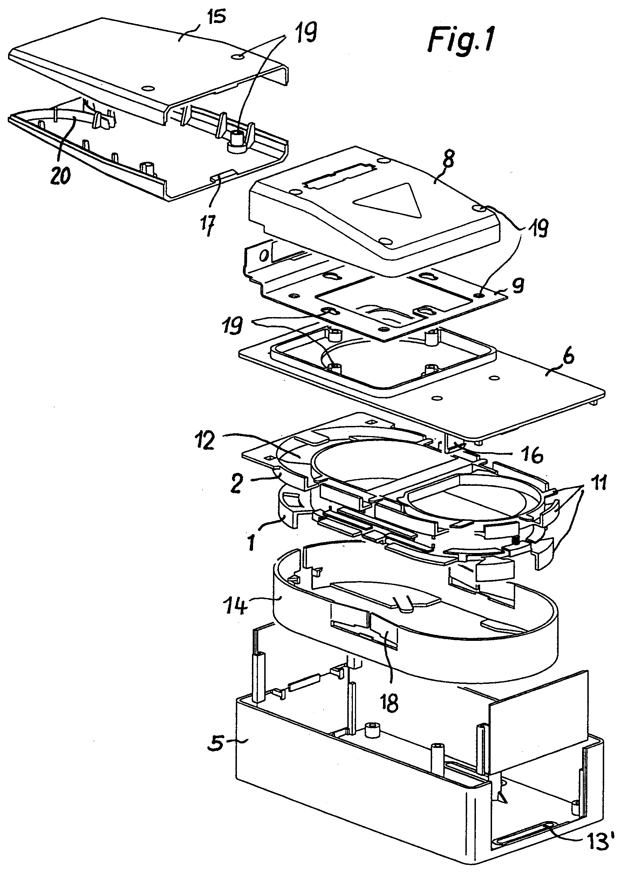

Wie Fig. 1 zeigt und wie bereits einleitend erwähnt, weist die eine oder andere Kassette 1 oder 2 einen Aufnahmebereich 10 für die Adern-Spleissung auf.

Ferner ist den Darstellungen der Fig. 1 bis 3 zu entnehmen, dass die Innenräume der Kassetten 1 und 2 radiusbegrenzende Führungen 11 sowie eine Längenausgleichzone 12 für die Bündeladern 3 resp. Pigtails 4 aufweisen.

Das Gehäuse 5 ist eine genormte und/oder module Rechteckdose mit stirn- und bodenseitiger Kabeleinführung 13,13', wobei die Kassetten 1 und 2 innerhalb des Gehäuses 5 von einem Schutzmantel 14 umgeben sind.

Weiter zeigen die Fig. 1 bis 3, dass der Adapter 9 mit seinen Steckern 7 und seiner Haube 8 beidseitig um 90° umsetzbar ist und dass ausgangsseitig des Adapters 9 zwischen diesem und der Haube 8 ein schachtelförmig ausgebildeter Radiusbegrenzer 15 für die aufzusteckenden Adern angeordnet ist.

Dieser Radiusbegrenzer 15 weist entsprechend gekrümmte Führungen 20 für die Adern auf.

Eine zweckmässige Ausgestaltung besteht zudem darin, dass Teile der Endverschlussanordnung mittels Schnapp- oder Steckverschluss 16,17,18 oder durch Schraubenmittel 19 lösbar miteinander verbunden sind.

Von Vorteil ist ferner, wenn wenigstens die Kassetten 1 und 2 aus transparentem Kunststoff sind, was eine übersichtlichere Aderführung erlaubt.

Zum Aufbau und zur Bestückung einer solchen erfindungsgemässen Endverschlussanordnung wird beispielsweise nach Wandmontage der Rechteckdose 5 die Bündelader 3 (Fig. 3) eingebracht, beispielsweise mit 1,5m Reserve und dann fixiert, etwa angebunden. Dann wird die Bündelader abisoliert, die Einzeladern freigelegt und gereinigt. Dann erfolgt ein Zusammenführen der Einzeladern mit dem Steckerpigtail 4 und deren Verspleissung. Diese Spleissungen werden danach in die Spleissaufnahme 10 eingelegt, die Pigtail-Reserve 4' aufgewickelt und die Deckplatte 6 auf die obere Kassette 2 aufgeschnappt (Fig. 2).

Danach wird der Adapter 9 aufgebracht und dort die Stecker 7 eingesetzt (Fig. 2).

Weiter wird die Bündelader 3 in die untere Kassette 1 eingeschlauft, der Schutzmantel 14 um die Kassetten 1 und 2 gelegt und das Ganze in die Rechteckdose 5 eingesetzt.

Daraufhin werden die Gegenstecker (nicht gezeigt) eingesteckt, der Radiusbegrenzer 15 angebracht und das Ganze mittels der Haube 8 fixiert.

Aus dem Vorstehenden ergibt sich so eine optimale Endverschlussanordnung, die eine schnelle und sichere Verbindung zwischen Bündelader und Schaltadern gewährleistet.

## Patentansprüche

1. Endverschlussanordnung für Lichtwellenleiter zum Anschluss von Einrichtungen der Tele- und Datenkommunikation, gekennzeichnet durch vorzugsweise zwei, vorzugsweise lösbar miteinander verbundene, je eine Ebene bildende Kassetten (1 und 2), wobei der Innenraum der einen Kassette (1) der Aufnahme einer Arbeits- und Spleissreserve (3') einer Bündelader (3) und der Innenraum der anderen Kassette (2) der Aufnahme von Arbeits- und Spleissreserven (4') von Stecker-Anschlussadern (Pigtails) (4) dient, welche Kassetten (1 und 2) von einem Gehäuse (5) umgeben sind, das obenseitig von einer Deckplatte (6) wenigstens teilweise verschlossen ist, die einen, mit Steckern (7) bestückten, von einer Haube (8) abgedeckten Adapter (9) trägt.

2. Endverschlussanordnung nach Anspruch 1, dadurch gekennzeichnet, dass die eine oder andere Kassette (1 oder 2) einen Aufnahmebereich (10) für die Adern-Spleissung aufweist.

3. Endverschlussanordnung nach Anspruch 1, dadurch gekennzeichnet, dass die Innenräume der Kassetten radiusbegrenzende Führungen (11) sowie eine Längenausgleichzone (12) für die Bündeladern (3) resp. Pigtails (4) aufweisen.

4. Endverschlussanordnung nach Anspruch 1, dadurch gekennzeichnet, dass das Gehäuse (5) eine genormte und/oder module Rechteckdose mit stirn- und bodenseitiger Kabeleinführung (13,13') ist.

5. Endverschlussanordnung nach Anspruch 1, dadurch gekennzeichnet, dass die Kassetten (1 und 2) innerhalb des Gehäuses (5) von einem Schutzmantel (14) umgeben sind.

6. Endverschlussanordnung nach Anspruch 1, dadurch gekennzeichnet, dass der Adapter (9) mit seinen Steckern (7) und seiner Haube (8) beidseitig um 90° umsetzbar ist.

7. Endverschlussanordnung nach Anspruch 1, dadurch gekennzeichnet, dass ausgangsseitig des Adapters (9) zwischen diesem und der Haube (8) ein schachtelförmig ausgebildeter Radiusbegrenzer (15) für die aufzusteckenden Adern angeordnet ist.

8. Endverschlussanordnung nach den Ansprüchen 1 bis 7, dadurch gekennzeichnet, dass Teile der Endverschlussanordnung mittels Schnapp- oder Steckverschluss (16,17,18) oder durch Schraubenmittel (19) lösbar miteinander verbunden sind.
